# EUROPEAN PATENT APPLICATION

(11) **EP 1 818 216 A1**
(43) Date of publication of application: **15.08.2007**
(21) Application number: 05808015.1
(22) Date of filing: 21.10.2005
(51) Int. Cl.: B60R 1/12

(54) **OUTSIDE REAR-VIEW MIRROR FOR VEHICLE**

(30) Priority: 22.10.2004 ES 200402517
(71) Applicant: Fico Mirrors, SA, 08028 Barcelona (ES)
(72) Inventor: SACCAGNO BECACCI, Andrea, I-10153 Torino (IT)
(74) Representative: SUGRANES - VERDONCES - FERREGÜELA
(86) International application number: PCT/ES2005/000561
(87) International publication number: WO 2006/045869

(57) **Abstract**

The invention relates to an outside rear-view mirror for a vehicle. The invention comprises at least one mirror that is surrounded by at least one mirror casing which is supported in a frame that is articulated to a base member which is designed to be fixed to the vehicle. According to the invention, the mirror can be seen by the occupant of the vehicle, such as to provide same with a directly-reflected image which forms a direct field of vision. The aforementioned base member comprises a first cover segment which can be joined to the first cover segment, said assembly forming a casing comprising an opening in which an image detector device is disposed. The image detector captures an image outside of the direct field of vision through the opening, which can be transmitted to the driver.

## Description

### Technical field of the invention

The invention relates to an outside rear-view mirror for vehicle that is adapted to carry an image-detecting device.

### Background of the invention

Different embodiments are currently known of outside rear-view mirrors for vehicle that include several electronic components and image-detecting devices, such as a CCD camera. In particular, the provision of cameras on rear-view mirrors makes it possible to transmit certain information to the driver that he or she may not be able to obtain directly from the image reflected in the mirror, as the field of vision to which the driver has direct access in the mirror is not complete, meaning that he or she cannot control what is happening in the space determined by the so-called blind spot. Cameras make it possible to capture images in the space that is not controlled by the driver in the mirror. The electronic components and image-detecting devices are housed, in a known manner, in the inner cavity of the mirror casing, making use of the empty space between the rear part of the reflector element and the inner wall of said casing.

According to one embodiment, the casing that surrounds the back part of the rear-view mirror is provided with inner housings. This is the case of the outside rear-view mirror disclosed in patent document US 2001/0015862, wherein an inner housing, which is designed to hold a permanent electronic control module, is moulded into the inner wall of the mirror casing.

In an alternative embodiment, patent application PCT/ES03/00239, by the same applicant, discloses an outside rear-view mirror that comprises a casing with a means of fastening for the reflector and a means of fastening for an image-detecting device, both of these being means of fastening configured and disposed in such a way that a first reflector can optionally be mounted over the means of fastening of the image-detecting device, thereby hiding it, or a second reflector, smaller than the first, that leaves the means of fastening of the image-detecting device accessible for assembling an image-detecting device in operational conditions.

This type of rear-view mirror suffers from the drawback that, although it makes use of a space in the rear part of the mirror, the mirror's surface area is reduced, as a suitable space must be left for the camera to capture the images through the window in the casing.

Furthermore, the special adaptation of the casing to hold this type of device suffers from the drawback that different models of casing are required for outside rear-view mirrors with a camera and for mirrors designed to fit simpler models of cars without cameras or electronic devices, which leads to increased costs and reduced versatility when assembling the rear-view mirrors.

Another problem deriving from this type of rear-view mirrors is that the cameras housed in the mirror casing are liable to break more easily, as these rear-view mirror casings are often moved suddenly from their operational position by knocks received during inappropriate manoeuvring of the vehicle or other vehicles hitting the rear-view mirror.

### Explanation of the invention

The outside rear-view mirror for vehicle that is the object of the invention, which overcomes the aforementioned drawbacks, comprises at least one mirror surrounded by at least one mirror casing supported by a frame articulately connected to a base member that is adapted to be fastened to the vehicle, said mirror being visible to the occupant of the vehicle to provide him or her with an image that is directly reflected therein and which constitutes a direct field of vision.

Essentially, the rear-view mirror is characterised in that the base member comprises a first cover portion joined thereto and a second cover portion that can be attached to said first portion, this assembly constituting a casing provided with at least one opening and inside which an image-detecting device is disposed that captures, through said opening, an image that is preferably outside the direct field of vision, which can be transmitted to the driver. The invention is also characterised in that at least one of said attachable cover portions can be replaced by another or others that give the casing an alternative configuration, without the opening and with a smaller volume, which is designed to remain empty.

Thanks to this characteristic, the provision of an image-detecting device does not reduce the surface area of the mirror, and it is not necessary to manufacture different casings according to whether the rear-view mirror has an image-detecting device or not. The housing of said device in the area of the support structure also offers certain protection to the device, as a slight impact to the rear-view mirror would not affect it since it is located outside the frame and therefore outside the mirror casing, which would receive the impact.

Preferably, said cover portions have complementary configurations in their contact areas that help to establish a stable connection between them.

According to another characteristic of the invention, the base member is adapted to be fastened directly to the vehicle bodywork and the casing surrounds the member, which rests on the vehicle bodywork.

According to a preferred embodiment, the base member consists of a triangular support that can be fastened to a front lower corner of a front window of the vehicle, an overhanging arm to which said mirror frame is connected stemming from said triangular support.

According to another characteristic of the invention, a light-emitting device is housed inside the casing, the light emitted being visible from outside through a second opening provided in the casing.

Preferably, this second opening is in an area of the casing facing the driver of the vehicle so that it can be seen directly.

### Brief description of the drawings

An embodiment of the outside rear-view mirror for vehicle that is the object of the invention is illustrated in the attached drawings. In said drawings:
Fig. 1, is a perspective view of a rear-view mirror according to the invention, without one of the parts that can be attached together to form the hollow housing for the support structure;
Fig. 2, is a perspective view of the same rear-view mirror, wherein the hollow housing is closed by a front cover; and
Fig. 3, is a perspective view of the rear-view mirror shown in shown in Fig. 1, wherein the hollow housing is closed by a front cover with a window through which an image-detecting device, which is housed inside said housing, can capture images.
Fig. 4, is a perspective view of a rear-view mirror fastened to a base member that consists of a triangular support piece designed to be fastened to a vehicle window, stemming from which is an overhanging support arm to which a frame carrying the mirror is articulated.

### Detailed description of the drawings

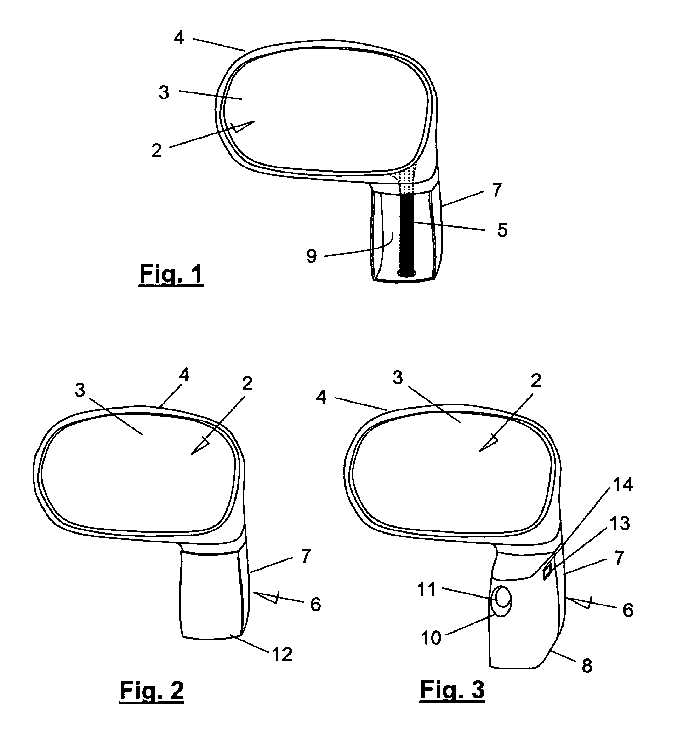

The example shown in Figs. 1 to 3 corresponds to a "flag-type" rear-view mirror comprising, in a known manner, a surrounding casing 4 that houses a mirror 2 whose front face 3 is oriented so as to be visible to the driver of the vehicle, whilst its rear face faces the inner wall of the casing 4, which determines a surrounding housing that defines a hollow inner space in which the actuation mechanisms for the support and orientation of the mirror 2 are disposed.

Unlike known rear-view mirrors, the rear-view mirror in Figs. 1 to 3 comprises a casing 6 that surrounds the base member or support structure 5 of a mirror frame (which supports said casing 4), said base member being fastened to the vehicle bodywork by one of its ends whilst its other end is articulated to said frame.

In the example shown herein, said casing 6 consists of two parts or cover portions that can be attached together as described below:

A first portion 7 or rear part does not vary and it can optionally be solidly joined to the structure or base member 5, whilst a second cover portion 8 or front part, which can be attached to the first portion 7, varies according to whether the rear-view mirror is to be provided with an image-detecting device or not.

Specifically, Fig. 2 shows the rear-view mirror in Fig. 1 wherein a cover portion 12, or front cover, has been attached and sealed to said first portion 7 or rear part, closing a hollow space 9 determined by the two cover portions that form the casing 6.

Fig. 3 shows the same rear-view mirror but wherein the second portion 8, or front cover, attached to the first cover portion 7, or rear part, is configured differently, as it is adapted to house an image-detecting device 11, such as a camera. For this reason, the second cover portion or front part 8 of the casing 6 is configured in such a way that the inner cavity 9 determined by the two cover portions 7 and 8 when they are attached together is greater than in the previous case. At the same time, the second cover portion or front part 8 is provided with a first outer opening 10 on its front face, through which an image-detecting device 11 captures the images of an area of the blind spot that is not visible in the mirror 2; and a second opening 14, through which a light emitter 13, also housed inside the casing 6, emits visible light, so that it can be seen by the driver.

The second cover portion or front part 8 of the casing 6 has, in this case, the necessary inner housings or means of support for the image-detecting device 11 to be tightly housed in or attached to the casing, so that it cannot move or vibrate, thus affecting the quality of the images that it captures. This means of support can be moulded into the inner wall of the second cover portion or front part 8 of the casing 6.

If the rear-view mirror is not intended to have a similar device, it is merely necessary to replace this second cover portion or front part 8 with a simple cover 12, as is shown in Fig. 2.

Of course, it may be the case that the parts forming the casing 6 are not a rear part 7 and front part 8 or 12, respectively, but that they might be attached to each other from either side of the structure 5, being e.g. symmetrical, meaning that in this case both parts would have to be replaced if the rear-view mirror is to be provided with an image-detecting device using a standard rear-view mirror without the image-detecting device.

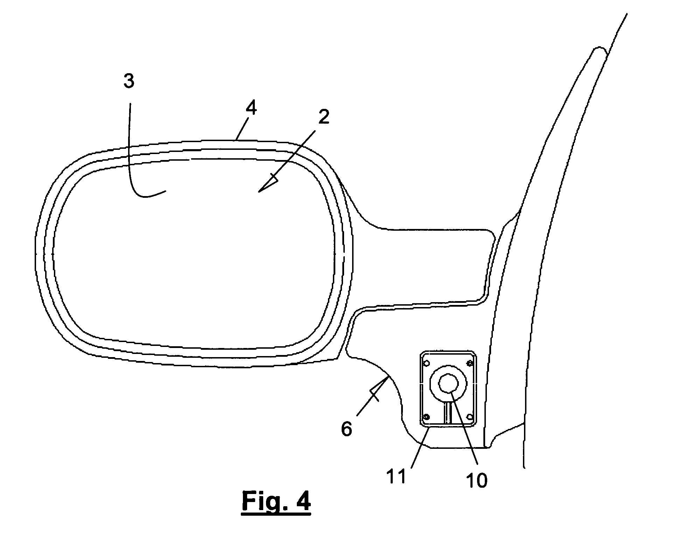

Fig. 4 shows a second example of an embodiment of the rear-view mirror device of the invention, which comprises a more classical base member, which is not shown, of the type that comprises an essentially triangular cover portion stemming from which is an overhanging arm, the cover portions forming a casing 6 like that described above, which can house an image-detecting device.

## Claims

1. Outside rear-view mirror for vehicle, which comprises at least one mirror (2) surrounded by at least one mirror casing (4) supported by a frame articulately connected to a base member (5) that is adapted to be fastened to the vehicle, said mirror (2) being visible to the occupant of the vehicle to provide him or her with an image that is directly reflected therein and which constitutes a direct field of vision, **characterised in that** said base member comprises a first cover portion (7) joined thereto and a second cover portion (8) that can be joined to said first cover portion, this assembly constituting a casing (6) with an opening (10) inside which an image-detecting device (11) is disposed that captures, through said opening, an image that is outside said direct field of vision, which can be transmitted to the driver.

2. Rear-view mirror, according to claim 1, **characterised in that** the casing (6) can be replaced by substituting the second cover portion (8) for another cover (12) that gives said structural portion an alternative configuration, without an opening and with a smaller volume.

3. Rear-view mirror, according to claim 1, **characterised in that** said covers (7, 8) have complementary configurations in their contact areas that help to establish a stable connection between them.

4. Rear-view mirror, according to claim 1, **characterised in that** said base member (5) is adapted to be fastened directly to the vehicle bodywork and **in that** said casing (6) surrounds the member (5), which rests on the vehicle bodywork.

5. Rear-view mirror, according to claim 1, **characterised in that** said base member (5) consists of a triangular support that can be fastened to a front lower corner of a front window of the vehicle, an overhanging arm to which said mirror frame is connected stemming from said triangular support.

6. Rear-view mirror, according to claim 1, **characterised in that** a light-emitting device (13) is housed inside the casing (6), the light emitted being visible from outside through a second opening (14) provided in the casing (6).

7. Rear-view mirror, according to claim 6, **characterised in that** the second opening (14) in the casing (6) is in an area of said casing (6) facing the driver of the vehicle so that it can be seen directly.
